# EUROPÄISCHE PATENTSCHRIFT

(11) **EP 0 673 886 B1**
(45) Veröffentlichungstag und Bekanntmachung des Hinweises auf die Patenterteilung: **05.12.2001**
(21) Anmeldenummer: 95103790.2
(22) Anmeldetag: 15.03.1995
(51) Int. Cl.: C02F 3/34

(54) **Verfahren zur Herabsetzung der Schleim- und Belagbildung in Anlagen, in denen Wasser von Papier- und Zellstoffmaschinen im Kreislauf geführt wird, sowie in Anlagen, in denen Kühhlwasser im Kreislauf geführt wird**
Slime and deposits controlling process in industrial plants where waters from pulp and paper industry, as well as cooling waters, are treated
Procédé pour réduire les incrustations dans des installations où sont traitées des eaux de papeterie, ou des eaux de refroidissement

(30) Priorität: 24.03.1994 DE 4410271
(43) Veröffentlichungstag der Anmeldung: 27.09.1995
(73) Patentinhaber: Lumos Trading & Investments Corporation, Road Town, Tortola (VG)
(72) Erfinder: Möller-Bremer, Christine, Dr. Ing., D-27637 Nordholz (DE)
(74) Vertreter: Kador & Partner

(56) Entgegenhaltungen:
- EP-A- 0 185 963
- EP-A- 0 372 520
- EP-A- 0 496 905
- DE-B- 1 301 759
- US-A- 4 655 926

## Beschreibung

Die Erfindung betrifft ein Verfahren zur Herabsetzung der Schleim- und Belagbildung in Anlagen, in denen Wasser von Papier- und Zellstoffmaschinen im Kreislauf geführt wird, sowie in Anlagen, in denen Kühlwasser im Kreislauf geführt wird.

Bei Wasserkreisläufen, insbesondere bei der zunehmend praktizierten Kreislaufschließung des Siebwassers an Papiermaschinen und bei Kühlwasserkreisläufen kommt es immer wieder zu Schleim- und/oder Belagbildung an festen Oberflächen und in der flüssigen Phase. Bei der bei Papiermaschinen durchgeführten Schließung des Siebwasserkreislaufes finden Mikroorganismen durch das im Siebwasser vorhandene hohe organische und anorganische Nährstoffangebot und ein günstiges umgebendes Milieu, wie erhöhte Temperatur, pH-Wert nahe dem Neutralpunkt, und Sauerstoffeintrag, sehr gute Wachstumsbedingungen vor. Funktionell kann man zwei Klassen von Mikroorganismen unterscheiden. Jene, die als Einzelzellen frei im Kreislaufwasser vorkommen und jene, die einzeln oder in Kolonien an Faser-, Füll- und Feinstoffe sowie an die Oberflächen der Maschinenteile, wie Leitungen, Pumpen und Behälter angelagert sind. Die nicht-sessilen Mikroorganismen der ersten Gruppe verursachen keine Produktionsprobleme, da ihre Partikelgrößen unter 10 *µ*m liegen. Nicht-sessile Mikroorganismen sind solche, die keine oder nur eine geringe Neigung haben, sich an Oberflächen festzusetzen. Die sessilen Mikroorganismen der zweiten Gruppe führen jedoch zu Problemen in Form von unerwünschten Schleim- und Belagbildungen. Beim Lösen des Schleims oder Belags von den Oberflächen führt dies zur Bildung von Batzen und damit gegebenenfalls zu Löchern in der Papierbahn. Dadurch wird die Papierbahn geschwächt, das heißt es kann zu Abrissen der Papierbahn und damit zu Maschinenstillständen kommen. Um diese Schleim- und Belagbildung zu verhindern, ist es bekannt, dem Siebwasser Biozide, Lignosulfonate, ausgewählte Mikroorganismen oder Enzyme zuzusetzen.

Durch den Einsatz von Bioziden wird das Wachstum der Mikroorganismen unterdrückt und die Mikroorganismen werden zum Teil geschädigt. Der Einsatz von Bioziden wird jedoch immer kritischer bewertet. Je größer die Menge an Biozid ist, desto größer ist nämlich auch die Schädigung der Umwelt, der das Siebwasser bei Kreislaufentleerung zugeführt wird. Da Mikroorganismen gegenüber Bioziden zur Resistenzbildung neigen, ist es ferner notwendig, häufiger die bioziden Wirksubstanzen zu wechseln und/oder ihre Menge zu erhöhen. Dies bedeutet erhebliche Umweltbelastung bzw. erhebliche Kosten zum Beispiel für eine nachgeschaltete adaptierte Kläranlage oder einen Vorfluter.

Lignosulfonate werden als sogenannte Komplexbildner eingesetzt, die unter bestimmten Voraussetzungen die Nahrungsaufnahme der Mikroorganismen unterbinden.

Manchmal muß mit dem Lignosulfonat noch ein Biozid eingesetzt werden, allerdings in erheblich geringerem Ausmaß als bei alleiniger Bioziddosierung (vgl. DE-PS 34 47 686). Die Problematik der Biozide bleibt aber in abgeschwächter Form vorhanden.

Enzyme werden dem Siebwasserkreislauf beigegeben, um die hochmolekularen Polymere, die die Schleim- und Belagbildung fördern, in niedermolekulare für die Schleim- und Belagbildung unkritische Moleküle umzuwandeln. Dieses Verfahren ist zwar umweltfreundlich, hat sich aber in der großtechnischen Anwendung bisher nicht bewährt, vermutlich weil dadurch nur eine kurzzeitige Viskositätsherabsetzung erzielbar ist, da die von den Enzymen gebildeten Hydrolyse- oder sonstigen niedermolekularen Produkte für die schleimbildenden Mikroorganismen sogar bevorzugte Nährstoffe darstellen können.

Eine neue Methode ist die Zugabe von ausgewählten vereinzelten Mikroorganismen, die aufgrund ihrer großen Gesamtoberfläche zu einer starken Aufnahme der im Siebwasser vorhandenen Nährstoffe führen. Es stellt sich somit ein Wettbewerb um die in dem Kreislaufwasser vorhandenen Nährstoffe ein, welcher, dank der hohen Nährstoffaufnahme durch die zugegebenen nicht-sessilen Mikroorganismen zu deren Gunsten, d.h. zu Lasten der schleim- und belagbildenden Mikroorganismen ausgeht (vgl. DE-PS 38 41 596). Der Umgang mit Mikroorganismen ist jedoch nicht für alle Anlagen geeignet.

Aufgabe der vorliegenden Erfindung ist es für Anlagen, in denen Wasser von Papier- und Zellstoffmaschinen im Kreislauf geführt wird, und für Anlagen mit Kühlwasserkreislauf eine verbesserte umweltfreundliche Methode zu finden, bei der die Schleim- und Belagbildung im Wasserkreislauf herabgesetzt wird und damit die Stillstandszeiten der Anlage gemindert werden.

Diese Aufgabe wird erfindungsgemäß dadurch gelöst, daß man dem Kreislaufwasser Nährstoffe zusetzt, wodurch ein Nährstoff-Angebot eingestellt wird, das das Wachstum nicht sessiler Mikroorganismen gegenüber dem Wachstum sessiler Mikroorganismen begünstigt,
wobei die Ist-Konzentration der Nährstoffe und die Keimbelastung des Kreislaufwassers ermittelt wird, für die ermittelte Keimbelastung die Soll-Konzentration der Nährstoffe berechnet wird, die bei dem Frischwasserverbrauch des Wasserkreislaufs der Anlage zur Aufrechterhaltung der Biomasse im Kreislaufwasser benötigt wird, und,
falls die ermittelte Ist-Konzentration eines Nährstoffes geringer ist als dessen Soll-Konzentration, der Gehalt dieses Nährstoffes erhöht wird.

Dies wird durch den Zusatz spezifischer Nährstoffe erzielt, der das Gesamtnährstoffangebot verändert, so daß die Artenzusammensetzung der natürlich im Kreislauf vorkommenden, beziehungsweise auch künstlich zugesetzten Mikroorganismen dahingehend positiv beeinflußt wird, das Wachstum der nicht-sessilen Mikroorganismen zu fördern und damit die sessilen, schleim- und belagbildenen Mikroorganismen am Wachstum zu hindern.

In einer bevorzugten Ausführungsform des erfindungsgemäßen Verfahrens werden dem Kreislaufwasser Makro- und/oder Mikronährstoffe zugesetzt. Unter den Makronährstoffen wählt man bevorzugt Kohlenstoff-, Stickstoff-, Phosphor-, Schwefel-, Natrium-, Kalium-, Kalzium-, Magnesium- und/oder Chlorverbindungen aus, welche in Wasser löslich sind.

Bevorzugte Mikronährstoffe sind die Spurenelemente Eisen, Kupfer, Mangan, Zink, Brom, Molybdän, Vanadium, Kobalt, Jod und/oder Selen sowie die Vitamine Biotin, Nikotinsäure, Thiamin, 4-Aminobenzoat, Panthothenat, Pyridoxamin und/oder Cyanocobalamin.

Diese Nährstoffe werden in Abhängigkeit von der jeweiligen organischen Fracht bzw. der Mikroorganismen-Mischpopulation ausgewählt. Sie können einzeln oder in Verbindung miteinander eingesetzt werden.

Vorzugsweise werden die Nährstoffe direkt in den Hauptkreislauf des jeweiligen Kreislaufwassers eingeführt. Sie können in besonders geeigneter Weise aber auch in mit dem Hauptkreislauf assoziierte Nebenkreisläufe eingeführt werden. Um unter Umständen die Kontaktzeit der Mikroorganismen mit den Nährstoffen zu erhöhen, was in Anlagen mit hohen Durchflußraten erforderlich sein kann, ist es vorteilhaft, eine Menge des Kreislaufwassers in einen Sekundärkreislauf abzuziehen und dort die Nährstoffe zuzusetzen.

Die Nährstoffzugabe kann, je nach den jeweiligen Anforderungen zeitproportional oder mengenproportional erfolgen.

Die der Erfindung zugrundeliegende Idee ist die Tatsache, daß in Wasserkreisläufen von Papier- und Zellstoffmaschinen und in Kühlwasserkreisläufen im allgemeinen Mischpopulationen von Mikroorganismen vorhanden sind, die optimal an die jeweiligen Umweltbedingungen angepaßt sind. Eine solche Mischpopulation besteht aus vielen einzelnen Arten, von denen jede ihre eigenen Wachstumsparameter besitzt. Zur Charakterisierung des Zellwachstums verwendet man die spezifische Wachstumsrate *µ*ₘₐₓ und jene Substratkonzentration bzw. Nährstoffkonzentrationen Kₛ, bei der die Wachstumsrate einer Kultur den halbmaximalen Wert erreicht. So hat jede Spezies bestimmte Werte von *µ*ₘₐₓ und Kₛ in bezug auf ein bestimmtes Substrat ("Allgemeine Mikrobiologie", H.G. Schlegel, Thieme Verlag, Stuttgart, 1985).

Vergleicht man die Wachstumskurven zweier Mikroorganismen mit verschiedenen *µ* ₘₐₓ und Kₛ Werten, so erkennt man, daß der Stamm mit niedrigen *µ*ₘₐₓ- und Kₛ-Werten bei niedrigen, der Stamm mit hohen *µ*ₘₐₓ⁻ und Kₛ-Werten jedoch bei höheren Substratkonzentrationen einen Wachstumsvorteil hat. Je nach Substratkonzentration ist so einer der beiden Stämme im Vorteil ("Control of activated-sludge filamentous building", J. Chudoba, P. Grau und V. Ottova, Water Research 7, p.1389-1406, 1973).

Untersucht man nun die Wachstumskinetiken der einzelnen Gruppen von Mikroorganismen in Wasserkreisläufen, so kann man grob zwei Gruppen einteilen:
1. Schnell wachsende nicht-sessile Einzelzellen mit hohen Kₛ-Werten und
2. langsam wachsende fadenförmige sessile Mikroorganismen mit niedrigen Kₛ-Werten.

Das bedeutet, daß niedrige Substratkonzentrationen das Wachstum von fadenförmigen, und damit problemverursachenden Mikroorganismen fördern. Bei höheren Substratkonzentrationen herrschen jedoch Bedingungen, die das Wachstum von einzelnen Zellen favorisieren. Diese Einzelzellen verursachen keine Produktionsprobleme, da sie im allgemeinen keine festen, hautartigen Beläge bilden.

Zur Gruppe 1 der schnellwachsenden, hauptsächlich als Einzelzellen lebenden nicht-sessile Mikroorganismen lassen sich folgende Gattungen zählen: Pseudomonas, Arthrobacter, Acromonas, Vibrio, Acinetobacter, Bacillus, Alcaligenes, Enterobakterien, Lactobacillus, Micrococcus, Staphylococcus und Streptococcus.

Zur Gruppe 2 der fadenförmigen sessile Mikroorganismen und Schleimbildner zählt man Spaerotilus, Beggiatoa, Flexibacter, Haliscomenobacter, Nocardia, Thiothrix, Microthrix, verschiedene andere noch nicht genauer definierte, nur mit Typbezeichnungen versehene, Bakterien ("Handbuch für die mikroskopische Schlammuntersuchung", Eikelboom und v. Buijse, Hirthammer Verlag München 1983) und die große Gruppe der hyphenbildenden Pilze.

Das erfindungsgemäße Verfahren beruht auf der Zugabe jener Faktoren bzw. Nährstoffe, welche die Limitierung der Einzelzellen im System aufheben, d.h. deren Wachstum fördern. Bei der Analyse der chemischen Zusammensetzung der Stoffgemische in Wasserkreisläufen findet man, daß beispielsweise Stickstoff N und Phosphor P nur in geringen Mengen vorhanden sind. Durch diese Bedingungen werden die fadenförmigen Mikroorganismen bevorzugt und es gilt dieses Gleichgewicht durch geeignete Nährstoffzugabe zu kippen.

Zu den wichtigsten Makro- und Mikronährstoffen, deren Konzentration für das biologische Gleichgewicht und damit die Verminderung der Schleim- und Belagbildung entscheidend ist, zählen unter den Makronährstoffen Kohlenstoff C, Stickstoff N, Phosphor P, Schwefel S, Natrium Na, Kalium K, Calcium Ca, Magnesium Mg, Chlor Cl und unter den Mikronährstoffen die Spurenelemente Eisen Fe, Kupfer Cu, Mangan Mn, Zink Zn, Brom Br, Molybdän Mo, Vanadium V, Kobalt Co, Jod I und Selen Se sowie ferner die Vitamine Biotin, Nicotinsäure, Thiamin, 4-Aminobenzoat, Panthothenat, Pyridoxamin und Cyanocobalamin.

Als Quellen für die voranstehend genannten Makro- und Mikronährstoffe können beispielsweise Glucose, Saccharose, Stärke, Ammoniak, Natriumnitrat, Harnstoff, o-Phosphorsäure, Polyphosphate, Eisen-III-Sulfat, Kaliumdihydrogenphosphat, Magnesiumsulfat, Calciumcarbonat, Natriumchlorid, Wasserglas und dergleichen dienen.

Es ist im Rahmen der Erfindung nicht erforderlich, einen genauen Bereich der zuzugebenden Mengen der Nährstoffe anzugeben. Die Menge ist vielmehr je nach dem Defizit der für das Wachstum der nicht-sessilen Bakterien erforderlichen Nährstoffe zu ermitteln.

Die Biomasse in Wasserkreisläufen ist im allgemeinen folgendermaßen zusammengesetzt (in % der Trockensubstanz TS) :

| | | | |
|---|---|---|---|
| C | 46,9 | K | 2,2 |
| H | 6,4 | Mg | 0,3 |
| O | 32,9 | Ca | 0,1 |
| N | 8,4 | Na | 0,05 |
| P | 1,2 | Si | 0,05 |
| S | 0,6 | Fe | 0,005 |

Nachfolgend wird das erfindungsgemäße Verfahren anhand von Beispielen genauer beschrieben.

### Beispiel 1

In diesem Beispiel werden die Zugabemengen für zwei typische Elemente bestimmt und aufgelistet. Dazu werden folgende Annahmen getroffen.
1. Zusammensetzung der Biomasse (wie oben);
2. die Masse eines Bakteriums mit einem Durchmesser von 1 *µ*m, einer Dichte von 1,1 g/cm³ und einer kugelförmigen Gestalt beträgt 5,72 x 10⁻¹³ g.
3. Konzentration der wichtigsten Ionen im Siebwasser einer Papiermaschine ("Untersuchung von Störsubstanzen in geschlossenen Kreislaufsystemen", W. Auhorn und J. Melzer, Wochenblatt für Papierfabrikation 107, S. 493-502, 1979).

Daraus ergeben sich für die zwei Elemente N und P in Abhängigkeit vom Frischwasserverbrauch folgende Konzentrationen, die für die Aufrechterhaltung der Zellmasse benötigt werden. Die Angaben beziehen sich auf mg/kg Papier.

| Frischwasserverbrauch | 10⁷ N | Keime/ml P | 10⁸ N | Keime/ml P |
|---|---|---|---|---|
| 10 l/kg | 4,8 | 0,68 | 48 | 6,8 |
| 30 l/kg | 14,4 | 2,04 | 144 | 20,4 |

Im Siebwasser einer Papierfabrik findet man typischerweise folgende N und P Werte (in mg/kg Papier)

| Frischwasserverbrauch | N | P |
|---|---|---|
| 10 l/kg | 53,7 | 3 |
| 30 l/kg | 24,6 | 9 |

Durch Subtraktion der tatsächlichen von den Sollkonzentrationen ergibt sich folgende Tabelle (Werte in mg/kg Papier)

| Frischwasserverbrauch | 10⁷ N | Keime/ml P | 10⁸ N | Keime/ml P |
|---|---|---|---|---|
| 10 l/kg | - | - | - | 3,8 |
| 30 l/kg | - | - | 119,4 | 11,4 |

An diesem Beispiel sieht man, daß im Falle einer Keimbelastung von 10⁸ Keimen/ml, wie sie in geschlossenen Papiermaschinenkreisläufen durchaus üblich sind ("Mikrobiologie des Fabrikationswassers", A. Geller, Wochenblatt für Papierfabrikation 7, p. 219-221, 1981), Stickstoff N und Phosphor P in zu geringer Konzentration vorhanden sind. Sie werden in den entsprechenden Differenz-Konzentrationen zugegeben, um das Wachstum der nicht-sessilen Mikroorganismen zu steigern.

### Beispiel 2

In diesem Beispiel wurden in zwei Laborversuchsanlagen mehrtägige Versuche durchgeführt, wobei die eine ohne Zusatz von Nährstoffen als Kontrolle betrieben wurde.

Je 10 l Siebwasser I aus einer Papiermaschine, auf der Schreibpapier mit hohem Altpapieranteil produziert wird, wurde in zwei Versuchsanlagen im Labor parallel bei 35°C im Kreis gefahren. Pro Tag wurden 2 l gegen frisches Siebwasser I ausgetauscht.

Die beiden baugleichen Versuchsanlagen bestanden aus einem Vorratsbehälter (6 1) und einem Becken (4 1), in das zur Messung der Ablagerungen Metallstreifen eingehängt waren. Das Siebwasser wurde mit einer Pumpe umgewälzt, damit in der ganzen Versuchsanlage gleiche Nährstoffkonzentration, Temperatur und Sauerstoffversorgung gewährleistet war.

Die Keimbelastung dieses Kreislaufwassers betrug 5 x 10⁸ Keime/ml (48 h Inkubation auf Standard Plate Count Agar bei 30°C).

Die zwei Versuchsanlagen wurden eine Woche lang betrieben, eine Anlage wurde ohne Zusatz von Nährstoffen als Kontrolle verwendet, bei der anderen wurden pro Tag 50 ml Nährstofflösung zugegeben.

| Nährstofflösung: | |
|---|---|
| 20 g/l | NH₄Cl |
| 10 g/l | K₂HPO₄ |
| 5 g/l | FeSO₄.7H₂O |
| 5 g/l | MgSO₄ |

In der Anlage ohne Zusatz von Nährstoffen kam es bereits nach 2 Tagen zu einer deutlichen Schleim- und Belagbildung auf den zur Messung der Ablagerungen eingehängten Metallcoupons während in der Vergleichsanlage mit den zugesetzten Nährstoffen nur sehr dünne Beläge nachweisbar waren.

Nach 7 Tagen war der Unterschied noch deutlicher. In der Kontrollanlage ohne zugesetzte Nährstoffe hatten sich dicke, zähe Ablagerungen gebildet. In der parallel betriebenen Vergleichsanlage dagegen, waren nur dünne, leicht ablösbare Beläge vorhanden, die überdies sehr leicht zerteilbar waren.

Benötigt ein Kreislaufsystem einen hohen Frischwasserverbrauch wie beispielsweise an einer Papiermaschine ergeben sich hohe Durchflußraten. Dadurch kann es zu einem zu schnellen Auswaschen der zugegebenen Nährstoffe und damit zu einer zu geringen Kontaktzeit mit den Mikroorganismen, welche die Nährstoffe aufnehmen sollen, kommen. Nach dem erfindungsgemäßen Verfahren wird dieses mögliche Problem in einer bevorzugten Ausführungsform durch einen Sekundärkreislauf gelöst. Dabei wird ein Teil des Kreislaufwassers abgezogen und zur Behandlung unter Nährstoffzugabe im Bypass über einen Pufferbehälter gefahren. Nach einer ausreichenden Kontaktzeit, die gewährleistet, daß die Mikroorganismen die zugegebenen Nährstoffe auch aufnehmen und speichern können, wird der Tankinhalt in den Hauptkreislauf zurückgeführt. Dort haben die so behandelten nicht-sessilen Mikroorganismen gegenüber den dort verbliebenen sessilen, schleim- und belagbildenden Mikroorganismen einen Wachstumsvorteil. Es kommt zu einer Reduktion der Schleim- und Belagbildung im Produktionskreislauf.

Die Zugabe der Nährstoffe sowohl zum Hauptkreislauf als auch zu eventuell vorhandenen Sekundär- oder Nebenkreisläufen kann zeitproportional erfolgen, das heißt, daß eine bestimmte Menge vorzugsweise kontinuierlich über einen bestimmten Zeitraum zudosiert wird. Gegebenenfalls kann die Zugabe auch mengenproportional erfolgen, das heißt, daß die Konzentration bestimmter Nährstoffe im Hauptkreislauf automatisch bestimmt und die Zugabe dieser Nährstoffe in Abhängigkeit von der Konzentration gesteuert wird.

Die Zugabe der Nährstoffe bestimmt sich nach Art und Zusammensetzung, nach dem im Kreislaufwasser vorhandenen Nährstoffangebot sowie der vorhandenen Mikroorganismenpopulation. Es sind stets solche Nährstoffe zu wählen, die das Wachstum der sessilen, fadenförmigen Mikroorganismen unterdrücken.

Es versteht sich, daß im Rahmen der Erfindung, dem Kreislaufwasser auch weitere Zusätze beigegeben werden können. Insbesondere sind dies Tenside, welche die Sessilität der Mikroorganismen-Mischpopulation im ganzen herabsetzen, Lignosulfonat gemäß dem Verfahren der DE-PS 34 47 686, Enzyme für den katalytischen Abbau der im Kreislaufwasser enthaltenen organischen Stoffe. Ferner kann das Kreislaufwasser durch Begasung mit Luft oder Sauerstoff oder Zugabe sauerstoffabgebenden Substanzen wie H₂O₂ mit Sauerstoff angereichert werden. Sauerstoff beschleunigt den Abbau organischer Substanzen im Kreislaufwasser. Welche zusätzlichen Maßnahmen im einzelnen zu treffen sind, bestimmt sich weitgehend nach der Art der Anlage.

## Patentansprüche

1. Verfahren zur Herabsetzung der Schleim- und Belagbildung in Anlagen, in denen Wasser von Papier- und Zellstoffmaschinen im Kreislauf geführt wird, und in Anlagen, in denen Kühlwasser im Kreislauf geführt wird, **dadurch gekennzeichnet, daß** man dem Kreislaufwasser Nährstoffe zusetzt, wodurch ein Nährstoff-Angebot eingestellt wird, das das Wachstum nicht sessiler Mikroorganismen gegenüber dem Wachstum sessiler Mikroorganismen begünstigt,
wobei die Ist-Konzentration der Nährstoffe und die Keimbelastung des Kreislaufwassers ermittelt wird, für die ermittelte Keimbelastung die Soll-Konzentration der Nährstoffe berechnet wird, die bei dem Frischwasserverbrauch des Wasserkreislaufs der Anlage zur Aufrechterhaltung der Biomasse im Kreislaufwasser benötigt wird, und,
falls die ermittelte Ist-Konzentration eines Nährstoffes geringer ist als dessen Soll-Konzentration, der Gehalt dieses Nährstoffes erhöht wird.

2. Verfahren nach Anspruch 1, **dadurch gekennzeichnet, daß** dem Kreislaufwasser Makro- und/ oder Mikronährstoffe zugesetzt werden.

3. Verfahren nach Anspruch 1 oder 2, **dadurch gekennzeichnet, daß** man die Makronährstoffe unter Kohlenstoff-, Stickstoff-, Phosphor-, Schwefel-, Natrium-, Kalium-, Calcium-, Magnesium- und/oder Chlorverbindungen auswählt.

4. Verfahren nach Anspruch 1 bis 3, **dadurch gekennzeichnet, daß** man die Mikronährstoffe unter den Spurenelementen Eisen, Kupfer, Mangan, Zink, Brom, Molybdän, Vanadium, Kobalt, Jod und/oder Selen auswählt.

5. Verfahren nach Anspruch 1 bis 4, **dadurch gekennzeichnet, daß** man die Mikronährstoffe unter den Vitaminen Biotin, Nicotinsäure, Thiamin, 4-Aminobenzoat, Panthothenat, Pyridoxamin und/oder Cyanocobalamin auswählt

6. Verfahren nach einem der Ansprüche 1 bis 5, **dadurch gekennzeichnet, daß** die Nährstoffe direkt in den Hauptkreislauf des Kreislaufwassers eingeführt werden.

7. Verfahren nach einem der Ansprüche 1 bis 5, **dadurch gekennzeichnet, daß** die Nährstoffe in mit dem Hauptkreislauf assoziierte Nebenkreisläufe eingeführt werden.

8. Verfahren nach einem der Ansprüche 1 bis 5, **dadurch gekennzeichnet, daß** ein Teil des Kreislaufwassers vom Hauptkreislauf abgezogen und unter Zusatz der Nährstoffe im Bypass über einen Pufferbehälter gefahren wird, dessen Inhalt nach einer Kontaktzeit zur Aufnahme der zugesetzten Nährstoffe durch die Mikroorganismen in den Hauptkreislauf zurückgeführt wird.

9. Verfahren gemäß Anspruch 7 oder 8, **dadurch gekennzeichnet, daß** die Nährstoffzugabe zeitproportional erfolgt.

10. Verfahren gemäß Anspruch 7 oder 8, **dadurch gekennzeichnet, daß** die Nährstoffzugabe mengenproportional erfolgt.

## Claims

1. A method for reducing slime and film formation in a plant which circulates water from paper and pulp machines or a plant which circulates cooling water, **characterized in that** nutrients are added to the circulating water thereby adjusting a nutrient supply favoring the growth of nonsessile microorganisms over the growth of sessile microorganisms,
the actual concentration of the nutrients and the germ load of the circulating water are determined, the target concentration of nutrients required for maintaining the biomass in the circulating water at the fresh water consumption of the water circuit of the plant is calculated for the determined germ load, and
if the determined actual concentration of a nutrient is lower than its target concentration, the content of said nutrient is increased.

2. A method according to claim 1, **characterized in that** macro- and/or micronutrients are added to the circulating water.

3. A method according to claim 1 or 2, **characterized in that** the macronutrients are selected from compounds of carbon, nitrogen, phosphorus, sulfur, sodium, potassium, calcium, magnesium and/or chlorine.

4. A method according to claims 1 to 3, **characterized in that** the micronutrients are selected from the trace elements iron, copper, manganese, zinc, bromine, molybdenum, vanadium, cobalt, iodine and/or selenium.

5. A method according to claims 1 to 4, **characterized in that** the micronutrients are selected from the vitamins biotin, nicotinic acid, thiamin, 4-aminobenzoate, pantothenate, pyridoxamine and/or cyanocobalamin.

6. A method according to any of claims 1 to 5, **characterized in that** the nutrients are added directly into the primary circuit of the circulating water.

7. A method according to any of claims 1 to 5, **characterized in that** the nutrients are added into secondary circuits associated with the primary circuit.

8. A method according to any of claims 1 to 5, **characterized in that** a part of the circulating water is removed from the primary circuit and bypassed, with the nutrients being added, via a buffer vessel whose content is recycled to the primary circuit after a time of contact for the microorganisms to take up the added nutrients.

9. A method according to claim 7 or 8, **characterized in that** the nutrients are added in time-proportional fashion.

10. A method according to claim 7 or 8, **characterized in that** the nutrients are added in quantity-proportional fashion.

## Revendications

1. Procédé pour réduire la formation de masses visqueuses et de dépôts dans des installations dans lesquelles l'eau de machines à papier et à pâte à papier est conduite en cycle fermé, et dans des installations dans lesquelles est mise en circulation de l'eau de refroidissement, **caractérisé en ce que** l'on ajoute à l'eau en circulation des substances nutritives, l'apport en substances nutritives étant réglé de telle sorte que la croissance des micro-organismes non sessiles soit favorisée par rapport à la croissance des micro-organismes sessiles,
on détermine la concentration réelle en substances nutritives et la charge de germes de l'eau en circulation, on calcule pour la charge de germes déterminée la concentration de consigne en substances nutritives, qui est nécessaire pour la consommation d'eau froide du circuit d'eau de l'installation pour assurer le maintien de la biomasse dans l'eau en circulation, et
dans le cas où la concentration réelle déterminée d'une substance nutritive est plus faible que sa concentration de consigne, on augmente la teneur en cette substance nutritive.

2. Procédé selon la revendication 1, **caractérisé en ce qu'**on ajoute à l'eau en circulation des macro- et/ou microsubstances nutritives.

3. Procédé selon la revendication 1 ou 2, **caractérisé en ce que** l'on choisit les macrosubstances nutritives parmi les composés carbonés, azotés, phosphorés, soufrés, les composés de sodium, de potassium, de calcium, de magnésium et/ou les composés chlorés.

4. Procédé selon l'une des revendications 1 à 3, **caractérisé en ce que** l'on choisit les microsubstances nutritives parmi les oligoéléments suivants : fer, cuivre, manganèse, zinc, brome, molybdène, vanadium, cobalt, iode et/ou sélénium.

5. Procédé selon l'une des revendications 1 à 4, **caractérisé en ce que** l'on choisit les microsubstances nutritives parmi les vitamines anorthite, niacine, thiamine, aminobenzoate-4, pantothénate, pyridoxamine et/ou cyanocobalamine.

6. Procédé selon l'une des revendications 1 à 5, **caractérisé en ce que** l'on introduit les substances nutritives directement dans le circuit principal de l'eau en circulation.

7. Procédé selon l'une des revendications 1 à 5, **caractérisé en ce que** l'on introduit les substances nutritives dans des circuits annexes associés au circuit principal.

8. Procédé selon l'une des revendications 1 à 5, **caractérisé en ce que** l'on extrait du circuit principal une partie de l'eau en circulation et on le conduit sous addition des substances nutritives en dérivation dans un réservoir tampon dont le contenu est retourné dans le circuit principal après une certaine durée de contact pour l'absorption des substances nutritives ajoutées par les microorganismes.

9. Procédé selon la revendication 7 ou 8, **caractérisé en ce qu'**on réalise l'addition des substances nutritives de façon proportionnelle au temps.

10. Procédé selon la revendication 7 ou 8, **caractérisé en ce qu'**on réalise l'addition des substances nutritives de façon proportionnelle aux quantités.
